# EUROPEAN PATENT SPECIFICATION

(11) **EP 3 424 889 B1**
(45) Date of publication and mention of the grant of the patent: **05.07.2023**
(21) Application number: 16779482.5
(22) Date of filing: 07.03.2016
(51) Int. Cl.: C03C 13/00, C03C 3/095

(54) **HIGH MODULUS GLASS FIBRE COMPOSITION, AND GLASS FIBRE AND COMPOSITE MATERIAL THEREOF**
HOCHMODULIGE GLASFASERZUSAMMENSETZUNG SOWIE GLASFASER UND VERBUNDMATERIAL DARAUS
COMPOSITION DE FIBRE DE VERRE À HAUT MODULE D'ÉLASTICITÉ, ET FIBRE DE VERRE ET MATÉRIAU COMPOSITE DE CELLE-CI

(30) Priority: 29.02.2016 CN 201610112748
(43) Date of publication of application: 09.01.2019
(73) Proprietor: Jushi Group Co., Ltd., Tongxiang, Zhejiang 314500 (CN)
(72) Inventor: ZHANG, Yuqiang, Tongxiang Zhejiang 314500 (CN); CAO, Guorong, Tongxiang Zhejiang 314500 (CN); ZHANG, Lin, Tongxiang Zhejiang 314500 (CN); XING, Wenzhong, Tongxiang Zhejiang 314500 (CN); GU, Guijiang, Tongxiang Zhejiang 314500 (CN)
(74) Representative: Manitz Finsterwald Patent- und Rechtsanwaltspartnerschaft mbB
(86) International application number: PCT/CN2016/075781
(87) International publication number: WO 2016/165507

(56) References cited:
- WO-A1-2014/062715
- CN-A- 102 849 958
- CN-A- 103 086 605
- US-A1- 2015 018 194

## Description

### BACKGROUND

### OF THE INVENTION

### Field of the Invention

The present invention relates to a high modulus glass fiber, a composition for producing the same, and a composite material comprising the same.

### Description of the Related Art

Glass fiber is an inorganic fiber material that can be used to reinforce resins to produce composite materials with good performance. As a reinforcing base material for advanced composite materials, high-modulus glass fibers were originally used mainly in the aerospace industry or the national defense industry. With the progress of science and technology and the development of economy, high-modulus glass fibers have been widely used in civil and industrial fields such as wind blades, pressure vessels, offshore oil pipes and auto industry.

The original high-modulus glass compositions were based on an MgO-Al2O3-SiO2 system and a typical solution was S-2 glass of American company OC. The modulus of S-2 glass is 89-90GPa; however, the production of this glass is excessively difficult, as its forming temperature is up to about 1571 °C and its liquidus temperature up to 1470 °C and therefore it is difficult to realize large-scale industrial production. Thus, OC stopped production of S-2 glass fiber and transferred its patent to American company AGY.

Thereafter, OC developed HiPer-tex glass having a modulus of 87-89GP, which were a trade-off for production scale by sacrificing some of the glass properties. However, as the design solution of HiPer-tex glass was just a simple improvement over that of S-2 glass, the forming temperature and liquidus temperature remained high, which causes difficulty in attenuating glass fiber and consequently in realizing large-scale industrial production. Therefore, OC also stopped production of HiPer-tex glass fiber and transferred its patent to the European company 3B.

French company Saint-Gobain developed R glass that is based on an MgO-CaO-Al2O3-SiO2 system, and its modulus is 86-89GPa; however, the total contents of SiO2 and Al2O3 remain high in the traditional R glass, and there is no effective solution to improve the crystallization performance, as the ratio of Ca to Mg is inappropriately designed, thus causing difficulty in fiber formation as well as a great risk of crystallization, high surface tension and fining difficulty of molten glass. The forming temperature of the R glass reaches 1410°C and its liquidus temperature up to 1350°C. All these have caused difficulty in effectively attenuating glass fiber and consequently in realizing large-scale industrial production.

In China, Nanjing Fiberglass Research & Design Institute developed an HS2 glass having a modulus of 84-87GPa. It primarily contains SiO2, Al2O3 and MgO while also including certain amounts of Li2O, B2O3, CeO2 and Fe2O3. Its forming temperature is only 1245°C and its liquidus temperature is 1320°C. Both temperatures are much lower than those of S glass. However, since its forming temperature is lower than its liquidus temperature, which is unfavorable for the control of glass fiber attenuation, the forming temperature has to be increased and specially-shaped tips have to be used to prevent a glass crystallization phenomenon from occurring in the fiber attenuation process. This causes difficulty in temperature control and also makes it difficult to realize large-scale industrial production.

In general, the above-mentioned prior art for producing high modulus glass fiber faces such difficulties as relatively high liquidus temperature, high crystallization rate, relatively high forming temperature, high surface tension of the glass, high difficulty in refining molten glass, and a narrow temperature range (ΔT) for fiber formation. Thus, the prior art generally fails to enable an effective large-scale production of high modulus glass fiber.

US 2015/0018194 A1 discloses a glass fiber composition comprising, by weight, 59.73% SiO₂, 17.46% Al₂O₃, 0.29% Fe₂O₃, 7.46% CaO, 7.13% MgO, 0.61% Li₂O, 0.19% Na₂O, 0.09% K₂O, 4.44% Y₂O₃ and 1.90% La₂O₃.

WO 2014/062715 A1 discloses glass fiber compositions comprising, by weight, 45-65% SiO₂, 12-27% Al₂O3, 5-15% MgO, 2-10% CaO, 0-1% Na₂O and 4-14,5% Y₂O₃.

CN 103086605 A discloses a glass fiber composition comprising, by weight, 64% SiO₂, 19% Al₂O₃, 3% CaO, 10% MgO, ≤0.8% Na₂O+K₂O, 1% Li₂O and 1% Y₂O₃.

### SUMMARY OF THE INVENTION

It is one objective of the present disclosure to provide a composition for producing a high modulus glass fiber. The composition can not only significantly improve the elastic modulus of the glass fiber, but also overcome the technical problems in the manufacture of traditional high-modulus glasses including high crystallization risk, high difficulty in refining molten glass and low rate in hardening molten glass. The composition can also significantly reduce the liquidus temperature and forming temperature of high-modulus glasses, and under equal conditions, significantly reduce the crystallization rate and the bubble rate of glass, and is particularly suitable for the tank furnace production of a high modulus glass fiber having a low bubble rate.

To achieve the above objective, in accordance with one embodiment of the present disclosure, there is provided a composition for producing a high modulus glass fiber, the composition comprising percentage amounts by weight, as follows:

| | |
|---|---|
| SiO₂ | 53-68% |
| Al₂O₃ | 13-24.5% |
| Y₂O₃+La₂O₃ | 0.1-8% |
| La₂O₃ | 0.05-1.7% |
| CaO+MgO+SrO | 10-23% |
| Li₂O+Na₂O+K₂O | <2% |
| Fe₂O₃ | <1.5% |

In addition, the weight percentage ratio C1= Y₂O₃/(Y₂O₃+La₂O₃) is 0.7-0.95, and the weight percentage ratio C2 = (Li₂O+Na₂O+K₂O)/ (Y₂O₃+La₂O₃) is greater than 0.2.

In a class of this embodiment, the content range of Li₂O is 0.1-1.5% by weight.

In a class of this embodiment, the content range of La₂O₃ is 0.1-1.5% by weight.

In a class of this embodiment, the weight percentage ratio C2=(Li₂O+Na₂O+K₂O)/ (Y₂O₃+La₂O₃) is greater than 0.22.

In a class of this embodiment, the weight percentage ratio C2=(Li₂O+Na₂O+K₂O)/ (Y₂O₃+La₂O₃) is greater than 0.26.

In a class of this embodiment, the composition comprises the following components expressed as percentage amounts by weight:

| | |
|---|---|
| SiO₂ | 53-68% |
| Al₂O₃ | 13-24.5% |
| Y₂O₃+La₂O₃ | 0.1-8% |
| La₂O₃ | 0.05-1.7% |
| CaO+MgO+SrO | 10-23% |
| Li₂O | 0.1-1.5% |
| Li₂O+Na₂O+K₂O | <2% |
| Fe₂O₃ | <1.5% |

In addition, the weight percentage ratio C1= Y₂O₃/(Y₂O₃+La₂O₃) is 0.7-0.95, and the weight percentage ratio C2= (Li₂O+Na₂O+K₂O )/(Y₂O₃+La₂O₃) is greater than 0.2.

In a class of this embodiment, the composition comprises the following components expressed as percentage amounts by weight:

| | |
|---|---|
| SiO₂ | 53-68% |
| Al₂O₃ | 13-24.5% |
| Y₂O₃+La₂O₃ | 0.1-8% |
| Y₂O₃ | 0.1-6.3% |
| La₂O₃ | 0.05-1.7% |
| CaO+MgO+SrO | 10-23% |
| Li₂O+Na₂O+K₂O | <2% |
| Fe₂O₃ | <1.5% |

In addition, the weight percentage ratio C1= Y₂O₃/(Y₂O₃+La₂O₃) is 0.7-0.95, and the weight percentage ratio C2= (Li₂O+Na₂O+K₂O )/(Y₂O₃+La₂O₃) is greater than 0.2.

In a class of this embodiment, the composition comprises the following components expressed as percentage amounts by weight:

| | |
|---|---|
| SiO₂ | 53-68% |
| Al₂O₃ | 13-24.5% |
| Y₂O₃+La₂O₃ | 0.1-8% |
| Y₂O₃ | 0.1-6.3% |
| La₂O₃ | 0.05-1.7% |
| CaO+MgO+SrO | 10-23% |
| Li₂O | 0.1-1.5% |
| Li₂O+Na₂O+K₂O | <2% |
| Fe₂O₃ | <1.5% |

In addition, the weight percentage ratio C1= Y₂O₃/(Y₂O₃+La₂O₃) is 0.7-0.95, and the weight percentage ratio C2= (Li₂O+Na₂O+K₂O )/(Y₂O₃+La₂O₃) is greater than 0.2.

In a class of this embodiment, the content range of CaO is less than 12% by weight.

In a class of this embodiment, the content range of CaO is 2-11% by weight.

In a class of this embodiment, the total content of Y₂O₃+La₂O₃ is 0.5-7% by weight.

In a class of this embodiment, the total content of Y₂O₃+La₂O₃ is 1.5-6% by weight.

In a class of this embodiment, the composition comprises the following components expressed as percentage amounts by weight:

| | |
|---|---|
| SiO₂ | 53-68% |
| Al₂O₃ | 13-24.5% |
| Y₂O₃+La₂O₃ | 0.5-7% |
| Y₂O₃ | 0.1-6.3% |
| La₂O₃ | 0.05-1.7% |
| CaO+MgO+SrO | 10-23% |
| CaO | <12% |
| Li₂O+Na₂O+K₂O | <2% |
| Fe₂O₃ | <1.5% |

In addition, the weight percentage ratio C1= Y₂O₃/(Y₂O₃+La₂O₃) is 0.7-0.95, and the weight percentage ratio C2= (Li₂O+Na₂O+K₂O )/(Y₂O₃+La₂O₃) is greater than 0.2.

In a class of this embodiment, the composition comprises the following components expressed as percentage amounts by weight:

| | |
|---|---|
| SiO₂ | 53-68% |
| Al₂O₃ | 13-24.5% |
| Y₂O₃+La₂O₃ | 0.5-7% |
| Y₂O₃ | 0.1-6.3% |
| La₂O₃ | 0.05-1.7% |
| CaO+MgO+SrO | 10-23% |
| CaO | 2-11% |
| Li₂O | 0.1-1.5% |
| Li₂O+Na₂O+K₂O | <2% |
| Fe₂O₃ | <1.5% |

In addition, the weight percentage ratio C1= Y₂O₃/(Y₂O₃+La₂O₃) is 0.7-0.95, and the weight percentage ratio C2= (Li₂O+Na₂O+K₂O )/(Y₂O₃+La₂O₃) is greater than 0.2.

In a class of this embodiment, the composition comprises the following components expressed as percentage amounts by weight:

| | |
|---|---|
| SiO₂ | 53-68% |
| Al₂O₃ | 13-24.5% |
| Y₂O₃+La₂O₃ | 0.5-7% |
| Y₂O₃ | 0.3-6% |
| La₂O₃ | 0.1-1.5% |
| CaO+MgO+SrO | 10-23% |
| CaO | 2-11% |
| Li₂O | 0.1-1.5% |
| Li₂O+Na₂O+K₂O | <2% |
| Fe₂O₃ | <1.5% |

In addition, the weight percentage ratio C1= Y₂O₃/(Y₂O₃+La₂O₃) is 0.7-0.95, and the weight percentage ratio C2= (Li₂O+Na₂O+K₂O )/(Y₂O₃+La₂O₃) is greater than 0.2.

In a class of this embodiment, the composition comprises the following components expressed as percentage amounts by weight:

| | |
|---|---|
| SiO₂ | 54-64% |
| Al₂O₃ | 14-24% |
| Y₂O₃+La₂O₃ | 0.5-7% |
| Y₂O₃ | 0.3-6 % |
| La₂O₃ | 0.1-1.5% |
| CaO+MgO+SrO | 10-23% |
| CaO | 2-11% |
| Li₂O | 0.1-1.5% |
| Li₂O+Na₂O+K₂O | <2% |
| Fe₂O₃ | <1.5% |

In addition, the weight percentage ratio C1= Y₂O₃/(Y₂O₃+La₂O₃) is 0.7-0.95, and the weight percentage ratio C2= (Li₂O+Na₂O+K₂O )/(Y₂O₃+La₂O₃) is greater than 0.2.

In a class of this embodiment, the composition comprises the following components expressed as percentage amounts by weight:

| | |
|---|---|
| SiO₂ | 54-64% |
| Al₂O₃ | 14-24% |
| Y₂O₃+La₂O₃ | 0.5-7% |
| Y₂O₃ | 0.3-6% |
| La₂O₃ | 0.1-1.5% |
| CaO+MgO+SrO | 12-22% |
| CaO | 2-11% |
| Li₂O | 0.1-1.5% |
| Li₂O+Na₂O+K₂O | <2% |
| Fe₂O₃ | <1.5% |

In addition, the weight percentage ratio C1= Y₂O₃/(Y₂O₃+La₂O₃) is 0.7-0.95, and the weight percentage ratio C2= (Li₂O+Na₂O+K₂O )/(Y₂O₃+La₂O₃) is greater than 0.22.

In a class of this embodiment, the composition comprises the following components expressed as percentage amounts by weight:

| | |
|---|---|
| SiO₂ | 54-64% |
| Al₂O₃ | 14-24% |
| Y₂O₃+La₂O₃ | 1.5-6% |
| Y₂O₃ | 1-5.5% |
| La₂O₃ | 0.1-1.5% |
| CaO+MgO+SrO | 10-23% |
| CaO | 2-11% |
| Li₂O | 0.1-1.5% |
| Li₂O+Na₂O+K₂O | <2% |
| Fe₂O₃ | <1.5% |

In addition, the weight percentage ratio C1= Y₂O₃/(Y₂O₃+La₂O₃) is greater than 0.6, and the weight percentage ratio C2= (Li₂O+Na₂O+K₂O )/(Y₂O₃+La₂O₃) is greater than 0.22.

In a class of this embodiment, the composition comprises the following components expressed as percentage amounts by weight:

| | |
|---|---|
| SiO₂ | 54-64% |
| Al₂O₃ | 14-24% |
| Y₂O₃+La₂O₃ | 1.5-6% |
| Y₂O₃ | 1-5.5% |
| La₂O₃ | 0.1-1.5% |
| CaO+MgO+SrO | 10-23% |
| CaO | 2-11% |
| Li₂O | 0.1-1.5% |
| Li₂O+Na₂O+K₂O | <2% |
| Fe₂O₃ | <1.5% |

In addition, the weight percentage ratio C1= Y₂O₃/(Y₂O₃+La₂O₃) is 0.7-0.95, and the weight percentage ratio C2= (Li₂O+Na₂O+K₂O )/(Y₂O₃+La₂O₃) is greater than 0.26.

In a class of this embodiment, the content range of SrO is less than 2% by weight.

In a class of this embodiment, the content range of SrO is 0.1-1.5% by weight.

In a class of this embodiment, the content range of MgO is 8.1-12% by weight.

In a class of this embodiment, the content range of MgO is greater than 12% and less than or equal to 14% by weight.

In a class of this embodiment, the composition comprises the following components expressed as percentage amounts by weight:

| | |
|---|---|
| SiO₂ | 53-68% |
| Al₂O₃ | greater than 19% and less than or equal to 23% |
| Y₂O₃+La₂O₃ | 0.1-8% |
| La₂O₃ | 0.05-1.7% |
| CaO+MgO+SrO | 10-23% |
| MgO | ≤11% |
| Li₂O+Na₂O+K₂O | ≤1% |
| Fe₂O₃ | <1.5% |

In addition, the weight percentage ratio C1= Y₂O₃/(Y₂O₃+La₂O₃) is 0.7-0.95.

In a class of this embodiment, the composition contains TiO₂ with a content range of 0.1-3% by weight.

In a class of this embodiment, the composition contains ZrO₂ with a content range of 0-2% by weight.

In a class of this embodiment, the composition contains CeO₂ with a content range of 0-1% by weight.

In a class of this embodiment, the composition contains B₂O₃ with a content range of 0-2% by weight.

According to another aspect of this invention, a glass fiber produced with the composition for producing a glass fiber is provided.

In addition, the glass fiber has an elastic modulus greater than 90Gpa.

In addition, the glass fiber has an elastic modulus greater than 95Gpa.

According to yet another aspect of this invention, a composite material incorporating the glass fiber is provided.

The main inventive points of the composition for producing a glass fiber according to this invention lie in that it introduces rare earth oxides Y₂O₃ and La₂O₃ to make use of the synergistic effect there between, keeps tight control on the ratios of Y₂O₃/(Y₂O₃+La₂O₃) and (Li₂O+Na₂O+K₂O) /(Y₂O₃+La₂O₃) respectively, reasonably configures the content ranges of Y₂O₃, La₂O₃, Li₂O, CaO, MgO and CaO+MgO+SrO, utilizes the mixed alkali earth effect of CaO, MgO and SrO and the mixed alkali effect of K₂O, Na₂O and Li₂O, and selectively introduces appropriate amounts of TiO₂, ZrO₂, CeO₂ and B₂O₃.

Specifically, the composition for producing a glass fiber according to the present invention comprises the following components expressed as percentage amounts by weight:

| | |
|---|---|
| SiO₂ | 53-68% |
| Al₂O₃ | 13-24.5% |
| Y₂O₃+La₂O₃ | 0.1-8% |
| La₂O₃ | 0.05-1.7% |
| CaO+MgO+SrO | 10-23% |
| Li₂O+Na₂O+K₂O | <2% |
| Fe₂O₃ | <1.5% |

In addition, the weight percentage ratio C1= Y₂O₃/(Y₂O₃+La₂O₃) is 0.7-0.95, and the weight percentage ratio C2 = (Li₂O+Na₂O+K₂O)/ (Y₂O₃+La₂O₃) is greater than 0.2.

The effect and content of each component in the composition for producing a glass fiber is described as follows:
SiO₂ is a main oxide forming the glass network and has the effect of stabilizing all the components. In the composition for producing a glass fiber of the present invention, the content range of SiO₂ is 53-68%. Preferably, the SiO₂ content range can be 54-64%.

Al₂O₃ is another main oxide forming the glass network. When combined with SiO₂, it can have a substantive effect on the mechanical properties of the glass. The content range of Al₂O₃ in this invention is 13-24.5%. Too low of an Al₂O₃ content will make it impossible to obtain sufficiently high mechanical properties; too high of a content will significantly increase the viscosity of glass, thereby causing melting and refining difficulties. Preferably, the Al₂O₃ content can be 14-24%. In addition, the inventors have unexpectedly found in an embodiment that, when the weight percentage of Al₂O₃ is controlled to be greater than 19% and less than or equal to 23%, the weight percentage of MgO to be less than or equal to 11% and the total weight percentage of Li₂O+Na₂O+K₂O to be less than or equal to 1%, the glass can have exceptionally high modulus, excellent crystallization resistance and a wide temperature range (△T) for fiber formation.

Y₂O₃ is an important rare earth oxide. The inventors find that Y₂O₃ plays a particularly effective role in increasing the glass modulus and inhibiting the glass crystallization. As it is hard for Y³⁺ ions to enter the glass network, it usually exists as external ions at the gaps of the glass network. Y³⁺ ions have large coordination numbers, high field strength and electric charge, and high accumulation capability. Due to these features, Y³⁺ ions can help to improve the structural stability of the glass and increase the glass modulus, and meanwhile effectively prevent the movement and arrangement of other ions so as to inhibit the crystallization tendency of the glass. La₂O₃ is also an important rare earth oxide. The inventors have found that, when used alone, La₂O₃ obviously shows a weaker effect in increasing the glass modulus and inhibiting the crystallization, as compared with Y₂O₃. However, when these two oxides are used simultaneously with an appropriate wegitht percentage ratio there between, a remarkable synergistic effect will be achieved unexpectedly. Such effect is better than that obtained with the use of Y₂O₃ or La₂O₃ alone for increasing the glass modulus and inhibiting the crystallization. The inventors hold that, although Y₂O₃ and La₂O₃ are of an oxide of the same type sharing similar physical and chemical properties, the two oxides differ from each other in terms of coordinaiton state in that yttrium ions generally are hexa-coordinated while lanthanum ions are octahedral. Therefore, the simultaneous use of these two oxides, with the weight percentage ratio C1= Y₂O₃/(Y₂O₃+La₂O₃) greater than 0.5, would render the following advantages: (1) more coordination states of the ions outside the glass network would be produced, which helps to enhance the glass stability and modulus; (2) the hexa-coordination of yttrium ions assisted by the octahedron of lanthanum ions would further enhance the structural integrity and modulus of the glass; and (3) it would be less likely for the ions to form regular arrangements at lowered temperatures, which help to significantly reduce the growth rate of crystal phases and thus further increase the resistacne to glass crystallization. In addition, lanthanum oxide can improve the refining effect of molten glass. However, the molar mass and ionic radiuses of lanthanum are both big and an excessive amount of lanthanum ions would affect the structural stability of the glass, so the introduced amount of La₂O₃ should be limited.

In the composition for producing a glass fiber of the present invention, the combined content range of Y₂O₃+La₂O₃ can be 0.1-8%, preferably can be 0.5-7%, and more preferably can be 1.5-6%. Meanwhile, the weight percentage ratio C1= Y₂O₃/(Y₂O₃+La₂O₃) is 0.7-0.95. In addition, the content range of La₂O₃ is 0.05-1.7%, and more preferably 0.1-1.5%. Further, the Y₂O₃ content can be 0.1-6.3%, preferably 0.3-6%, and more preferably 1-5.5%.

The inventors also find that the synergistic effect of the above two rare earth oxides is closely related to the free oxygen content in the glass. Y₂O₃ in crystalline state has vacancy defects and, when Y₂O₃ are introduced to the glass, these vacancy defects would be filled by other oxides, especially alkali metal oxides. Different filling degrees would lead to different coordination state and stacking density of Y₂O₃, thus having a significant effect on the glass properties. Similarly, La₂O₃ also needs a large amount of oxygen to fill the vacancies. In order to acquire sufficient free oxygen and accordingly achieve a more compact stacking structure and better crystallization resistance, the range of the weight percentage ratio C2=(Li₂O+Na₂O+K₂O)/(Y₂O₃+La₂O₃) in the present invention is greater than 0.2, preferably greater than 0.22, and more preferably greater than 0.26.

Both K₂O and Na₂O can reduce glass viscosity and are good fluxing agents. The inventors have found that, replacing Na₂O with K₂O while keeping the total amount of alkali metal oxides unchanged can reduce the crystallization tendency of glass and improve the fiber forming performance. Compared with Na₂O and K₂O, Li₂O can not only significantly reduce glass viscosity thereby improving the glass melting performance, but also obviously help improve the mechanical properties of glass. In addition, a small amount of Li₂O provides considerable free oxygen, which helps more aluminum ions to form tetrahedral coordination, enhances the network structure of the glass and further improves the mechanical properties of glass. However, as too many alkali metal ions in the glass composition would affect the corrosion resistance of the glass, the introduced amount should be limited. Therefore, in the composition for producing a glass fiber of the present invention, the total content range of Li₂O+Na₂O+K₂O is lower than 2%. Further, the content range of Li₂O is 0.1-1.5%.

CaO, MgO and SrO primarily have the effect of controlling the glass crystallization and regulating the glass viscosity and the hardening rate of molten glass. Particularly on the control of the glass crystallization, the inventors have obtained unexpected effects by controlling the introduced amounts of them and the ratios between them. Generally, for a high-performance glass based on the MgO-CaO-Al₂O₃-SiO₂ system, the crystal phases it contains after glass crystallization include mainly diopside (CaMgSi₂O₆) and anorthite (CaAl₂Si₂O₃). In order to effectively inhibit the tendency for these two crystal phases to crystallize and decrease the glass liquidus temperature and the rate of crystallization, this invention has rationally controlled the total content of CaO+MgO+SrO and the ratios between them and utilized the mixed alkali earth effect to form a compact stacking structure, so that more energy are needed for the crystal nucleases to form and grow. In this way, the glass crystalization tendency is inhibited and the hardening performance of molten glass is optimized. Further, a glass system containing strontium oxide has more stable glass structure, thus improving the glass properties. In the composition for producing a glass fiber of the present invention, the range of the total content of CaO+MgO+SrO is 10-23%, and preferably 12-22%.

As a network modifier, too much CaO would increase the crystalllization tendency of the glass that lead to the precipitation of crystals such as anorthite and wollastonite in the glass melt. Therefore, the content range of CaO can be less than 12%, and preferably can be 2-11%. MgO has the similar effect in the glass network as CaO, yet the field strength of Mg²⁺ is higher, which plays an important role in increasing the glass modulus. Furthermore, in one embodiment of the present invention, the content range of MgO can be 8.1-12%; in another embodiment of the present invention, the content range of MgO can be greater than 12% and less than or equal to 14%. Furthermore, the content range of SrO can be lower than 2%, and preferably can be 0.1-1.5%.

Fe₂O₃ facilitates the melting of glass and can also improve the crystallization performance of glass. However, since ferric ions and ferrous ions have a coloring effect, the introduced amount should be limited. Therefore, in the composition for producing a glass fiber of the present invention, the content range of Fe₂O₃ is lower than 1.5%.

In the composition for producing a glass fiber of the present invention, appropriate amounts of TiO₂, ZrO₂, CeO₂ and B₂O₃ can be selectively introduced to further increase the glass modulus and improve the glass crystallization and refining performance. In the composition for producing a glass fiber of the present invention, the TiO₂ content can be 0.1-3%, the ZrO₂ content can be 0-2%, the CeO₂ content can be 0-1%, and the B₂O₃ content can be 0-2%.

In addition, the composition for producing a glass fiber of the present invention can include small amounts of other components with a total content not greater than 2%.

In the composition for producing a glass fiber of the present invention, the beneficial effects produced by the aforementioned selected ranges of the components will be explained by way of examples through the specific experimental data.

The following are examples of preferred content ranges of the components contained in the composition for producing a glass fiber according to the present invention.

### Composition 1

The composition for producing a high modulus glass fiber according to the present invention comprises the following components expressed as percentage amounts by weight:

| | |
|---|---|
| SiO₂ | 53-68% |
| Al₂O₃ | 13-24.5% |
| Y₂O₃+La₂O₃ | 0.1-8% |
| La₂O₃ | 0.05-1.7% |
| CaO+MgO+SrO | 10-23% |
| Li₂O | 0.1-1.5% |
| Li₂O+Na₂O+K₂O | <2% |
| Fe₂O₃ | <1.5% |

In addition, the weight percentage ratio C1=Y₂O₃/(Y₂O₃+La₂O₃) is 0.7-0.95, and the weight percentage ratio C2= (Li₂O+Na₂O+K₂O )/(Y₂O₃+La₂O₃) is greater than 0.2.

According to Composition 1, the resulting glass fiber has an elastic modulus greater than 90GPa.

### Composition 2

The composition for producing a high modulus glass fiber according to the present invention comprises the following components expressed as percentage amounts by weight:

| | |
|---|---|
| SiO₂ | 53-68% |
| Al₂O₃ | 13-24.5% |
| Y₂O₃+La₂O₃ | 0.1-8% |
| Y₂O₃ | 0.1-6.3% |
| La₂O₃ | 0.05-1.7% |
| CaO+MgO+SrO | 10-23% |
| Li₂O+Na₂O+K₂O | <2% |
| Fe₂O₃ | <1.5% |

In addition, the weight percentage ratio C1=Y₂O₃/(Y₂O₃+La₂O₃) is 0.7-0.95, and the weight percentage ratio C2= (Li₂O+Na₂O+K₂O )/(Y₂O₃+La₂O₃) is greater than 0.2.

### Composition 3

The composition for producing a high modulus glass fiber according to the present invention comprises the following components expressed as percentage amounts by weight:

| | |
|---|---|
| SiO₂ | 53-68% |
| Al₂O₃ | 13-24.5% |
| Y₂O₃+La₂O₃ | 0.1-8% |
| Y₂O₃ | 0.1-6.3% |
| La₂O₃ | 0.05-1.7% |
| CaO+MgO+SrO | 10-23% |
| Li₂O | 0.1-1.5% |
| Li₂O+Na₂O+K₂O | <2% |
| Fe₂O₃ | <1.5% |

In addition, the weight percentage ratio C1=Y₂O₃/(Y₂O₃+La₂O₃) is 0.7-0.95, and the weight percentage ratio C2= (Li₂O+Na₂O+K₂O )/(Y₂O₃+La₂O₃) is greater than 0.2.

### Composition 4

The composition for producing a high modulus glass fiber according to the present invention comprises the following components expressed as percentage amounts by weight:

| | |
|---|---|
| SiO₂ | 53-68% |
| Al₂O₃ | 13-24.5% |
| Y₂O₃+La₂O₃ | 0.5-7% |
| Y₂O₃ | 0.1-6.3% |
| La₂O₃ | 0.05-1.7% |
| CaO+MgO+SrO | 10-23% |
| CaO | <12% |
| Li₂O+Na₂O+K₂O | <2% |
| Fe₂O₃ | <1.5% |

In addition, the weight percentage ratio C1=Y₂O₃/(Y₂O₃+La₂O₃) is 0.7-0.95, and the weight percentage ratio C2= (Li₂O+Na₂O+K₂O )/(Y₂O₃+La₂O₃) is greater than 0.2.

### Composition 5

The composition for producing a high modulus glass fiber according to the present invention comprises the following components expressed as percentage amounts by weight:

| | |
|---|---|
| SiO₂ | 53-68% |
| Al₂O₃ | 13-24.5% |
| Y₂O₃+La₂O₃ | 0.5-7% |
| Y₂O₃ | 0.1-6.3% |
| La₂O₃ | 0.05-1.7% |
| CaO+MgO+SrO | 10-23% |
| CaO | 2-11% |
| Li₂O | 0.1-1.5% |
| Li₂O+Na₂O+K₂O | <2% |
| Fe₂O₃ | <1.5% |

In addition, the weight percentage ratio C1=Y₂O₃/(Y₂O₃+La₂O₃) is 0.7-0.95, and the weight percentage ratio C2= (Li₂O+Na₂O+K₂O )/(Y₂O₃+La₂O₃) is greater than 0.2.

### Composition 6

The composition for producing a high modulus glass fiber according to the present invention comprises the following components expressed as percentage amounts by weight:

| | |
|---|---|
| SiO₂ | 53-68% |
| Al₂O₃ | 13-24.5% |
| Y₂O₃+La₂O₃ | 0.5-7% |
| Y₂O₃ | 0.3-6% |
| La₂O₃ | 0.1-1.5% |
| CaO+MgO+SrO | 10-23% |
| CaO | 2-11% |
| Li₂O | 0.1-1.5% |
| Li₂O+Na₂O+K₂O | <2% |
| Fe₂O₃ | <1.5% |

In addition, the weight percentage ratio C1=Y₂O₃/(Y₂O₃+La₂O₃) is 0.7-0.95, and the weight percentage ratio C2= (Li₂O+Na₂O+K₂O )/(Y₂O₃+La₂O₃) is greater than 0.2.

### Composition 7

The composition for producing a high modulus glass fiber according to the present invention comprises the following components expressed as percentage amounts by weight:

| | |
|---|---|
| SiO₂ | 54-64% |
| Al₂O₃ | 14-24% |
| Y₂O₃+La₂O₃ | 0.5-7% |
| Y₂O₃ | 0.3-6% |
| La₂O₃ | 0.1-1.5% |
| CaO+MgO+SrO | 10-23% |
| CaO | 2-11% |
| Li₂O | 0.1-1.5% |
| Li₂O+Na₂O+K₂O | <2% |
| Fe₂O₃ | <1.5% |

In addition, the weight percentage ratio C1=Y₂O₃/(Y₂O₃+La₂O₃) is 0.7-0.95, and the weight percentage ratio C2= (Li₂O+Na₂O+K₂O )/(Y₂O₃+La₂O₃) is greater than 0.2.

### Composition 8

The composition for producing a high modulus glass fiber according to the present invention comprises the following components expressed as percentage amounts by weight:

| | |
|---|---|
| SiO₂ | 54-64% |
| Al₂O₃ | 14-24% |
| Y₂O₃+La₂O₃ | 0.5-7% |
| Y₂O₃ | 0.3-6% |
| La₂O₃ | 0.1-1.5% |
| CaO+MgO+SrO | 12-22% |
| CaO | 2-11% |
| Li₂O | 0.1-1.5% |
| Li₂O+Na₂O+K₂O | <2% |
| Fe₂O₃ | <1.5% |

In addition, the weight percentage ratio C1=Y₂O₃/(Y₂O₃+La₂O₃) is 0.7-0.95, and the weight percentage ratio C2= (Li₂O+Na₂O+K₂O )/(Y₂O₃+La₂O₃) is greater than 0.22.

### Composition 9

The composition for producing a high modulus glass fiber according to the present invention comprises the following components expressed as percentage amounts by weight:

| | |
|---|---|
| SiO₂ | 54-64% |
| Al₂O₃ | 14-24% |
| Y₂O₃+La₂O₃ | 1.5-6% |
| Y₂O₃ | 1-5.5% |
| La₂O₃ | 0.1-1.5% |
| CaO+MgO+SrO | 10-23% |
| CaO | 2-11% |
| Li₂O | 0.1-1.5% |
| Li₂O+Na₂O+K₂O | <2% |
| Fe₂O₃ | <1.5% |

In addition, the weight percentage ratio C1=Y₂O₃/(Y₂O₃+La₂O₃) is 0.7-0.95, and the weight percentage ratio C2= (Li₂O+Na₂O+K₂O )/(Y₂O₃+La₂O₃) is greater than 0.22.

### Composition 10

The composition for producing a high modulus glass fiber according to the present invention comprises the following components expressed as percentage amounts by weight:

| | |
|---|---|
| SiO₂ | 53-68% |
| Al₂O₃ | 13-24.5% |
| Y₂O₃+La₂O₃ | 0.5-7% |
| Y₂O₃ | 0.1-6.3% |
| La₂O₃ | 0.05-1.7% |
| CaO+MgO+SrO | 10-23% |
| CaO | <12% |
| SrO | 0.1-1.5 |
| Li₂O+Na₂O+K₂O | <2% |
| Fe₂O₃ | <1.5% |

In addition, the weight percentage ratio C1=Y₂O₃/(Y₂O₃+La₂O₃) is 0.7-0.95, and the weight percentage ratio C2= (Li₂O+Na₂O+K₂O )/(Y₂O₃+La₂O₃) is greater than 0.2.

### Composition 11

The composition for producing a high modulus glass fiber according to the present invention comprises the following components expressed as percentage amounts by weight:

| | |
|---|---|
| SiO₂ | 53-68% |
| Al₂O₃ | greater than 19% and less than or equal to 23% |
| Y₂O₃+La₂O₃ | 0.1-8% |
| La₂O₃ | 0.05-1.7% |
| CaO+MgO+SrO | 10-23% |
| MgO | ≤11% |
| Li₂O+Na₂O+K₂O | ≤1% |
| Fe₂O₃ | <1.5% |

In addition, the weight percentage ratio C1=Y₂O₃/(Y₂O₃+La₂O₃) is 0.7-0.95.

According to Composition 11, the resulting glass fiber has an elastic modulus greater than 95GPa.

### Composition 12

The composition for producing a high modulus glass fiber according to the present invention comprises the following components expressed as percentage amounts by weight:

| | |
|---|---|
| SiO₂ | 53-68% |
| Al₂O₃ | 13-24.5 |
| Y₂O₃+La₂O₃ | 0.1-8% |
| La₂O₃ | 0.05-1.7% |
| CaO+MgO+SrO | 10-23% |
| MgO | greater than 12% and less than or equal to 14% |
| Li₂O+Na₂O+K₂O | <2% |
| Fe₂O₃ | <1.5% |

In addition, the weight percentage ratio C1=Y₂O₃/(Y₂O₃+La₂O₃) is 0.7-0.95.

According to Composition 12, the resulting glass fiber has an elastic modulus greater than 95GPa.

### Composition 13

The composition for producing a high modulus glass fiber according to the present invention comprises the following components expressed as percentage amounts by weight:

| | |
|---|---|
| SiO₂ | 54-64% |
| Al₂O₃ | 14-24% |
| Y₂O₃+La₂O₃ | 1.5-6% |
| Y₂O₃ | 1-5.5% |
| La₂O₃ | 0.1-1.5% |
| CaO+MgO+SrO | 10-23% |
| CaO | 2-11% |
| Li₂O | 0.1-1.5% |
| Li₂O+Na₂O+K₂O | <2% |
| Fe₂O₃ | <1.5% |

In addition, the weight percentage ratio C1=Y₂O₃/(Y₂O₃+La₂O₃) is 0.7-0.95, and the weight percentage ratio C2= (Li₂O+Na₂O+K₂O )/(Y₂O₃+La₂O₃) is greater than 0.22.

According to Composition 13, the composition has a liquidus temperature less than or equal to 1300 °C, preferably less than or equal to 1280 °C, and more preferably less than or equal to 1230 °C; and the elastic modulus of the resulting glass fiber is 92-106 GPa.

### Composition 14

The composition for producing a high modulus glass fiber according to the present invention comprises the following components expressed as percentage amounts by weight:

| | |
|---|---|
| SiO₂ | 54-64% |
| Al₂O₃ | 14-24% |
| Y₂O₃+La₂O₃ | 1.5-6% |
| Y₂O₃ | 1-5.5% |
| La₂O₃ | 0.1-1.5% |
| CaO+MgO+SrO | 10-23% |
| CaO | 2-11% |
| Li₂O | 0.1-1.5% |
| Li₂O+Na₂O+K₂O | <2% |
| Fe₂O₃ | <1.5% |

In addition, the weight percentage ratio C1=Y₂O₃/(Y₂O₃+La₂O₃) is 0.7-0.95, and the weight percentage ratio C2= (Li₂O+Na₂O+K₂O )/(Y₂O₃+La₂O₃) is greater than 0.26.

### Composition 15

A composition for producing a high modulus glass fiber which is not according to the present invention comprises the following components expressed as percentage amounts by weight:

| | |
|---|---|
| SiO₂ | 53-68% |
| Al₂O₃ | 13-24.5% |
| Y₂O₃+La₂O₃ | 0.1-8% |
| La₂O₃ | <1.8% |
| CaO+MgO+SrO | 10-23% |
| Li₂O+Na₂O+K₂O | <2% |
| Fe₂O₃ | <1.5% |
| TiO₂ | 0.1-3% |
| SrO | 0-2% |
| B₂O₃ | 0-2% |

In addition, the weight percentage ratio C1=Y₂O₃/(Y₂O₃+La₂O₃) is greater than 0.5.

### Composition 16

A composition for producing a high modulus glass fiber which is not according to the present invention comprises the following components expressed as percentage amounts by weight:

| | |
|---|---|
| SiO₂ | 53-68% |
| Al₂O₃ | 13-24.5% |
| Y₂O₃+La₂O₃ | 0.1-8% |
| La₂O₃ | <1.8% |
| CaO+MgO+SrO | 10-23% |
| Li₂O+Na₂O+K₂O | <2% |
| Fe₂O₃ | <1.5% |
| CeO₂ | 0-1% |
| ZrO₂ | 0-2% |
| SrO | 0.1-1.5% |

In addition, the weight percentage ratio C1=Y₂O₃/(Y₂O₃+La₂O₃) is greater than 0.5.

### DETAILED DESCRIPTION OF THE INVENTION

In order to better clarify the purposes, technical solutions and advantages of the examples of the present invention, the technical solutions in the examples of the present invention are clearly and completely described below. Obviously, the examples described herein are just part of the examples of the present invention and are not all the examples. All other exemplary embodiments obtained by one skilled in the art on the basis of the examples in the present invention without performing creative work shall all fall into the scope of protection of the present invention. What needs to be made clear is that, as long as there is no conflict, the examples and the features of examples in the present application can be arbitrarily combined with each other.

The basic concept of the present invention is that the components of the composition for producing a glass fiber expressed as percentage amounts by weight are: 53-68% SiO₂, 13-24.5% Al₂O₃, 0.1-8% Y₂O₃+La₂O₃, 0.05-1.7% La₂O₃, 10-23% CaO+MgO+SrO, less than 2% Li₂O+Na₂O+K₂O and less than 1.5% Fe₂O₃, wherein the range of the weight percentage ratio C1= Y₂O₃/(Y₂O₃+La₂O₃) is 0.7-0.95, and the weight percentage ratio C2= (Li₂O+Na₂O+K₂O )/(Y₂O₃+La₂O₃) is greater than 0.2. The composition can greatly increase the glass modulus, overcome such difficulties as high crystallization risk, high refining difficulty and low hardening rate of molten glass, noticeably reduce the liquidus and forming temperatures of glass, and significantly lower the glass crystallization rate and bubble rate, thus making it particularly suitable for high modulus glass fiber production with refractory-lined furnaces.

The specific content values of SiO₂, Al₂O₃, Y₂O₃, La₂O₃, CaO, MgO, Li₂O, Na₂O, K₂O, Fe₂O₃, TiO₂, SrO and ZrO₂ in the composition for producing a glass fiber of the present invention are selected to be used in the examples, and comparisons with S glass, traditional R glass and improved R glass are made in terms of the following six property parameters,
(1) Forming temperature, the temperature at which the glass melt has a viscosity of 103 poise.
(2) Liquidus temperature, the temperature at which the crystal nucleuses begin to form when the glass melt cools off -- i.e., the upper limit temperature for glass crystallization.
(3) ΔT value, which is the difference between the forming temperature and the liquidus temperature and indicates the temperature range at which fiber drawing can be performed.
(4) Peak crystallization temperature, the temperature which corresponds to the strongest peak of glass crystallization during the DTA testing. Generally, the higher this temperature is, the more energy is needed by crystal nucleuses to grow and the lower the glass crystallization tendency is.
(5) Elastic modulus, the linear elastic modulus defining the ability of glass to resist elastic deformation, which is to be measured as per ASTM2343.
(6) Amount of bubbles, to be determined in a procedure set out as follows: Use specific moulds to compress the glass batch materials in each example into samples of same dimension, which will then be placed on the sample platform of a high temperature microscope. Heat the samples according to standard procedures up to the pre-set spatial temperature 1500°C and then directly cool them off with the cooling hearth of the microscope to the ambient temperature without heat preservation. Finally, each of the glass samples is examined under a polarizing microscope to determine the amount of bubbles in the samples. A bubble is identified according to a specific amplification of the microscope.

The aforementioned six parameters and the methods of measuring them are well-known to one skilled in the art. Therefore, these parameters can be effectively used to explain the properties of the glass fiber composition of the present invention.

The specific procedures for the experiments are as follows: Each component can be acquired from the appropriate raw materials. Mix the raw materials in the appropriate proportions so that each component reaches the final expected weight percentage. The mixed batch melts and the molten glass refines. Then the molten glass is drawn out through the tips of the bushings, thereby forming the glass fiber. The glass fiber is attenuated onto the rotary collet of a winder to form cakes or packages. Of course, conventional methods can be used to deep process these glass fibers to meet the expected requirements.

The exemplary embodiments of the glass fiber composition according to the present invention are given below.

### Example 1

| | |
|---|---|
| SiO₂ | 59.3% |
| Al₂O₃ | 16.8% |
| CaO | 8.3% |
| MgO | 9.9% |
| Y₂O₃ | 1.8% |
| La₂O₃ | 0.4% |
| Na₂O | 0.23% |
| K₂O | 0.36% |
| Li₂O | 0.75% |
| Fe₂O₃ | 0.44% |
| TiO₂ | 0.43% |
| SrO | 1.0% |

In addition, the weight percentage ratio C1= Y₂O₃/(Y₂O₃+La₂O₃) is 0.82, and the weight percentage ratio C2= (Li₂O+Na₂O+K₂O )/(Y₂O₃+La₂O₃) is 0.61.

In Example 1, the measured values of the six parameters are respectively:

| | |
|---|---|
| Forming temperature | 1299 °C |
| Liquidus temperature | 1203 °C |
| ΔT | 96 °C |
| Peak crystallization temperature | 1030 °C |
| Elastic modulus | 94.8GPa |
| Amount of bubbles | 5 |

### Example 2

| | |
|---|---|
| SiO₂ | 59.2% |
| Al₂O₃ | 16.9% |
| CaO | 7.9% |
| MgO | 9.7% |
| Y₂O₃ | 3.3% |
| La₂O₃ | 0.5% |
| Na₂O | 0.22% |
| K₂O | 0.37% |
| Li₂O | 0.75% |
| Fe₂O₃ | 0.44% |
| TiO₂ | 0.44% |

In addition, the weight percentage ratio C1= Y₂O₃/(Y₂O₃+La₂O₃) is 0.87, and the weight percentage ratio C2= (Li₂O+Na₂O+K₂O )/(Y₂O₃+La₂O₃) is 0.35.

In Example 2, the measured values of the six parameters are respectively:

| | |
|---|---|
| Forming temperature | 1298 °C |
| Liquidus temperature | 1197°C |
| ΔT | 101°C |
| Peak crystallization temperature | 1034 °C |
| Elastic modulus | 96.4GPa |
| Amount of bubbles | 4 |

### Example 3

| | |
|---|---|
| SiO₂ | 58.8% |
| Al₂O₃ | 17.0% |
| CaO | 5.5% |
| MgO | 10.5% |
| Y₂O₃ | 5.0% |
| La₂O₃ | 0.6% |
| Na₂O | 0.27% |
| K₂O | 0.48% |
| Li₂O | 0.75% |
| Fe₂O₃ | 0.43% |
| TiO₂ | 0.41% |

In addition, the weight percentage ratio C1= Y₂O₃/(Y₂O₃+La₂O₃) is 0.89, and the weight percentage ratio C2= (Li₂O+Na₂O+K₂O )/(Y₂O₃+La₂O₃) is 0.27.

In Example 3, the measured values of the six parameters are respectively:

| | |
|---|---|
| Forming temperature | 1305 °C |
| Liquidus temperature | 1205 °C |
| ΔT | 100 °C |
| Peak crystallization temperature | 1035 °C |
| Elastic modulus | 102.1GPa |
| Amount of bubbles | 4 |

### Example 4

| | |
|---|---|
| SiO₂ | 57.8% |
| Al₂O₃ | 19.4% |
| CaO | 7.2% |
| MgO | 8.8% |
| Y₂O₃ | 3.7% |
| La₂O₃ | 0.6% |
| Na₂O | 0.13% |
| K₂O | 0.30% |
| Li₂O | 0.55% |
| Fe₂O₃ | 0.44% |
| TiO₂ | 0.82% |

In addition, the weight percentage ratio C1= Y₂O₃/(Y₂O₃+La₂O₃) is 0.93, and the weight percentage ratio C2= (Li₂O+Na₂O+K₂O )/(Y₂O₃+La₂O₃) is 0.23.

In Example 4, the measured values of the six parameters are respectively:

| | |
|---|---|
| Forming temperature | 1310°C |
| Liquidus temperature | 1196°C |
| ΔT | 114°C |
| Peak crystallization temperature | 1034 °C |
| Elastic modulus | 99.4GPa |
| Amount of bubbles | 4 |

### Example 5

| | |
|---|---|
| SiO₂ | 59.5% |
| Al₂O₃ | 16.5% |
| CaO | 5.8% |
| MgO | 12.1% |
| Y₂O₃ | 3.4% |
| La₂O₃ | 0.4% |
| Na₂O | 0.19% |
| K₂O | 0.28% |
| Li₂O | 0.70% |
| Fe₂O₃ | 0.44% |
| TiO₂ | 0.43% |

In addition, the weight percentage ratio C1= Y₂O₃/(Y₂O₃+La₂O₃) is 0.89, and the weight percentage ratio C2= (Li₂O+Na₂O+K₂O )/(Y₂O₃+La₂O₃) is 0.31.

In Example 5, the measured values of the six parameters are respectively:

| | |
|---|---|
| Forming temperature | 1296 °C |
| Liquidus temperature | 1216 °C |
| ΔT | 80°C |
| Peak crystallization temperature | 1023 °C |
| Elastic modulus | 98.8GPa |
| Amount of bubbles | 4 |

### Example 6

| | |
|---|---|
| SiO₂ | 59.3% |
| Al₂O₃ | 16.9% |
| CaO | 7.5% |
| MgO | 9.7% |
| Y₂O₃ | 3.1% |
| La₂O₃ | 0.4% |
| Na₂O | 0.21% |
| K₂O | 0.42% |
| Li₂O | 0.71% |
| Fe₂O₃ | 0.44% |
| TiO₂ | 0.43% |
| SrO | 0.6% |

In addition, the weight percentage ratio C1= Y₂O₃/(Y₂O₃+La₂O₃) is 0.89, and the weight percentage ratio C2= (Li₂O+Na₂O+K₂O )/(Y₂O₃+La₂O₃) is 0.38.

In Example 6, the measured values of the six parameters are respectively:

| | |
|---|---|
| Forming temperature | 1296°C |
| Liquidus temperature | 1198°C |
| ΔT | 98°C |
| Peak crystallization temperature | 1035 °C |
| Elastic modulus | 96.7GPa |
| Amount of bubbles | 4 |

Comparisons of the property parameters of the aforementioned examples and other examples of the glass fiber composition of the present invention with those of the S glass, traditional R glass and improved R glass are further made below by way of tables, wherein the component contents of the glass fiber composition are expressed as weight percentage. What needs to be made clear is that the total amount of the components in the examples is slightly less than 100%, and it should be understood that the remaining amount is trace impurities or a small amount of components which cannot be analyzed.

**Table 1A**

| | | A1 | A2 | A3 | A4 | A5 | A6 | A7 |
|---|---|---|---|---|---|---|---|---|
| Component | SiO₂ | 59.3 | 59.8 | 59.3 | 59.5 | 59.6 | 59.0 | 59.0 |
| | Al₂O₃ | 16.9 | 16.9 | 16.9 | 16.5 | 16.5 | 16.1 | 17.0 |
| | CaO | 7.5 | 8.0 | 8.1 | 5.8 | 5.1 | 9.1 | 8.1 |
| | MgO | 9.7 | 9.7 | 9.7 | 12.1 | 12.5 | 9.4 | 11.0 |
| | Y₂O₃ | 3.1 | 2.1 | 3.1 | 3.4 | 3.6 | 2.4 | 1.6 |
| | La₂O₃ | 0.4 | 0.4 | 0.4 | 0.4 | 0.4 | 1.0 | 0.7 |
| | Na₂O | 0.21 | 0.21 | 0.21 | 0.19 | 0.22 | 0.23 | 0.23 |
| | K₂O | 0.42 | 0.42 | 0.42 | 0.28 | 0.42 | 0.38 | 0.37 |
| | Li₂O | 0.71 | 0.71 | 0.71 | 0.70 | 0.50 | 0.70 | 0.65 |
| | Fe₂O₃ | 0.44 | 0.44 | 0.44 | 0.44 | 0.44 | 0.44 | 0.44 |
| | TiO₂ | 0.43 | 0.43 | 0.43 | 0.43 | 0.43 | 0.42 | 0.44 |
| | SrO | 0.6 | 0.6 | - | - | - | - | - |
| Ratio | C1 | 0.89 | 0.84 | 0.89 | 0.89 | 0.90 | 0.71 | 0.70 |
| | C2 | 0.38 | 0.54 | 0.38 | 0.31 | 0.29 | 0.39 | 0.54 |
| Parameter | Forming temperature/°C | 1296 | 1297 | 1295 | 1296 | 1298 | 1296 | 1290 |
| | Liquidus temperature /°C | 1198 | 1201 | 1205 | 1216 | 1223 | 1197 | 1210 |
| | ΔT /°C | 98 | 96 | 90 | 80 | 75 | 99 | 80 |
| | Peak crystallization temperature/°C | 1035 | 1032 | 1030 | 1023 | 1021 | 1033 | 1026 |
| | Elastic modulus /GPa | 96.7 | 95.2 | 95.7 | 98.8 | 99.6 | 95.4 | 94.4 |
| | Amount of bubbles/pcs | 4 | 4 | 4 | 4 | 5 | 2 | 3 |

**Table 1B**

| | | A8 | A9 | A10 | A11 | A12 | A13 | A14 |
|---|---|---|---|---|---|---|---|---|
| Component | SiO₂ | 59.6 | 59.3 | 62.1 | 59.1 | 57.0 | 57.8 | 59.2 |
| | Al₂O₃ | 16.9 | 16.8 | 15.7 | 14.9 | 21.1 | 19.4 | 15.5 |
| | CaO | 7.6 | 6.8 | 8.9 | 9.0 | 4.5 | 7.2 | 10.3 |
| | MgO | 9.6 | 11.2 | 9.4 | 10.6 | 10.0 | 8.8 | 9.6 |
| | Y₂O₃ | 3.1 | 3.5 | 1.1 | 2.4 | 3.5 | 3.7 | 1.9 |
| | La₂O₃ | 0.4 | 0.3 | 0.3 | 0.5 | 0.5 | 0.6 | 0.1 |
| | Na₂O | 0.21 | 0.23 | 0.23 | 0.23 | 0.25 | 0.13 | 0.21 |
| | K₂O | 0.41 | 0.51 | 0.42 | 0.38 | 0.34 | 0.30 | 0.43 |
| | Li₂O | 1.00 | 0.20 | 0.80 | 0.75 | 0.75 | 0.55 | 0.70 |
| | Fe₂O₃ | 0.44 | 0.44 | 0.44 | 0.44 | 0.44 | 0.44 | 0.44 |
| | TiO₂ | 0.43 | 0.43 | 0.39 | 0.42 | 0.76 | 0.82 | 0.39 |
| | SrO | - | - | - | - | 0.6 | - | - |
| | ZrO₂ | - | - | - | - | - | - | 1.0 |
| Ratio | C1 | 0.89 | 0.92 | 0.79 | 0.83 | 0.88 | 0.93 | 0.95 |
| | C2 | 0.46 | 0.25 | 1.04 | 0.47 | 0.34 | 0.23 | 0.67 |
| Parameter | Forming temperature/°C | 1292 | 1297 | 1297 | 1293 | 1306 | 1310 | 1295 |
| | Liquidus temperature /°C | 1198 | 1207 | 1199 | 1197 | 1214 | 1196 | 1201 |
| | ΔT /°C | 94 | 90 | 98 | 96 | 92 | 114 | 94 |
| | Peak crystallization temperature/°C | 1032 | 1028 | 1031 | 1032 | 1023 | 1034 | 1028 |
| | Elastic modulus /GPa | 96.5 | 96.9 | 93.5 | 94.6 | 99.2 | 99.4 | 94.2 |
| | Amount of bubbles/pcs | 5 | 5 | 6 | 4 | 5 | 4 | 6 |

**Table 1C**

| | | A15 | A16 | A17 | A18 | S glass | Traditional R glass | Improved R glass |
|---|---|---|---|---|---|---|---|---|
| Component | SiO₂ | 58.8 | 59.3 | 59.3 | 59.2 | 65 | 60 | 60.75 |
| | Al₂O₃ | 17.0 | 16.7 | 16.8 | 16.9 | 25 | 25 | 15.80 |
| | CaO | 5.5 | 9.4 | 8.3 | 7.9 | - | 9 | 13.90 |
| | MgO | 10.5 | 9.7 | 9.9 | 9.7 | 10 | 6 | 7.90 |
| | Y₂O₃ | 5.0 | 1.6 | 1.8 | 3.3 | - | - | - |
| | La₂O₃ | 0.6 | 0.8 | 0.4 | 0.5 | - | - | - |
| | Na₂O | 0.27 | 0.22 | 0.23 | 0.22 | trace amount | trace amount | 0.73 |
| | K₂O | 0.48 | 0.38 | 0.36 | 0.37 | trace amount | trace amount | |
| | Li₂O | 0.75 | 0.75 | 0.75 | 0.75 | - | - | 0.48 |
| | Fe₂O₃ | 0.43 | 0.44 | 0.44 | 0.44 | trace amount | trace amount | 0.18 |
| | TiO₂ | 0.41 | 0.43 | 0.43 | 0.44 | trace amount | trace amount | 0.12 |
| | SrO | - | - | 1.0 | - | - | - | - |
| Ratio | C1 | 0.89 | 0.67 | 0.82 | 0.87 | - | - | - |
| | C2 | 0.27 | 0.56 | 0.61 | 0.35 | - | - | - |
| Parameter | Forming temperature/°C | 1305 | 1298 | 1299 | 1298 | 1571 | 1430 | 1278 |
| | Liquidus temperature /°C | 1205 | 1200 | 1203 | 1197 | 1470 | 1350 | 1210 |
| | ΔT /°C | 100 | 98 | 96 | 101 | 101 | 80 | 68 |
| | Peak crystallization temperature/ °C | 1035 | 1032 | 1030 | 1034 | - | 1010 | 1016 |
| | Elastic modulus /GPa | 102.1 | 94.0 | 94.8 | 96.4 | 89 | 88 | 87 |
| | Amount of bubbles/pcs | 4 | 3 | 5 | 4 | 40 | 30 | 25 |

It can be seen from the values in the above tables that, compared with the S glass and traditional R glass, the glass fiber composition of the present invention has the following advantages: (1) much higher elastic modulus; (2) much lower liquidus temperature, which helps to reduce crystallization risk and increase the fiber drawing efficiency; relatively high peak crystallization temperature, which indicates that more energy is needed for the formation and growth of crystal nucleuses during the crystallization process of glass, i.e. the crystallization risk of the glass of the present invention is smaller under equal conditions; (3) smaller amount of bubbles, which indicates a better refining of molten glass.

Both S glass and traditional R glass cannot enable the achievement of large-scale production with refractory-lined furnaces and, with respect to improved R glass, part of the glass properties is compromised to reduce the liquidus temperature and forming temperature, so that the production difficulty is decreased and the production with refractory-lined furnaces could be achieved. By contrast, the glass fiber composition of the present invention not only has a sufficiently low liquidus temperature and crystallization rate which permit the production with refractory-lined furnaces, but also significantly increases the glass modulus, thereby resolving the technical bottleneck that the modulus of S glass fiber and R glass fiber cannot be improved with the growth of production scale.

The composition for producing a glass fiber according to the present invention can be used for making glass fibers having the aforementioned properties.

The composition for producing a glass fiber according to the present invention in combination with one or more organic and/or inorganic materials can be used for preparing composite materials having improved characteristics, such as glass fiber reinforced base materials.

Finally, what should be made clear is that, in this text, the terms "contain", "comprise" or any other variants are intended to mean "nonexclusively include" so that any process, method, article or equipment that contains a series of factors shall include not only such factors, but also include other factors that are not explicitly listed, or also include intrinsic factors of such process, method, object or equipment. Without more limitations, factors defined by such phrase as "contain a..." do not rule out that there are other same factors in the process, method, article or equipment which include said factors.

The above examples are provided only for the purpose of illustrating instead of limiting the technical solutions of the present invention. Although the present invention is described in details by way of aforementioned examples, one skilled in the art shall understand that modifications can also be made to the technical solutions embodied by all the aforementioned examples or equivalent replacement can be made to some of the technical features. However, such modifications or replacements will not cause the resulting technical solutions to substantially deviate from the spirits and ranges of the technical solutions respectively embodied by all the examples of the present invention.

### INDUSTRIAL APPLICABILITY OF THE INVENTION

The composition for producing a glass fiber of the present invention not only has a sufficiently low liquidus temperature and crystallization rate which enable the production with refractory-lined furnaces, but also significantly increases the glass modulus, thereby resolving the technical bottleneck that the modulus of S glass fiber and R glass fiber cannot be improved with the enhanced production scale. Compared with the current main-stream high-modulus glasses, the glass fiber composition of the present invention has made a breakthrough in terms of elastic modulus, crystallization performance and refining performance of the glass, with significantly improved modulus, remarkably reduced crystallization risk and relatively small amount of bubbles under equal conditions. Thus, the overall technical solution of the present invention is particularly suitable for the tank furnace production of a high modulus glass fiber having a low bubble rate.

## Claims

1. A composition for producing a high modulus glass fiber, comprising the following components with corresponding percentage amounts by weight:
| | |
|---|---|
| SiO₂ | 53-68% |
| Al₂O₃ | 13-24.5% |
| Y₂O₃+La₂O₃ | 0.1-8% |
| La₂O₃ | 0.05-1.7% |
| CaO+MgO+SrO | 10-23% |
| Li₂O+Na₂O+K₂O | <2% |
| Fe₂O₃ | <1.5% |
wherein
a weight percentage ratio C1=Y₂O₃/(Y₂O₃+La₂O₃) is 0.7-0.95, and a weight percentage ratio C2=(Li₂O+Na₂O+K₂O )/(Y₂O₃+La₂O₃) is greater than 0.2.

2. The composition of claim 1, comprising between 0.1 and 1.5 wt. % of Li₂O.

3. The composition of claim 1, comprising the following components with corresponding percentage amounts by weight:
| | |
|---|---|
| SiO₂ | 53-68% |
| Al₂O₃ | 13-24.5% |
| Y₂O₃+La₂O₃ | 0.1-8% |
| Y₂O₃ | 0.1-6.3% |
| La₂O₃ | 0.05-1.7% |
| CaO+MgO+SrO | 10-23% |
| Li₂O+Na₂O+K₂O | <2% |
| Fe₂O₃ | <1.5% |
wherein
a weight percentage ratio C1=Y₂O₃/(Y₂O₃+La₂O₃) is 0.7-0.95; and
a weight percentage ratio C2=(Li₂O+Na₂O+K₂O )/(Y₂O₃+La₂O₃) is greater than 0.2.

4. The composition of claim 1, comprising less than 12 wt. % of CaO.

5. The composition of claim 1, comprising between 2 and 11 wt. % of CaO.

6. The composition of claim 1, comprising between 1.5 and 6 wt. % of Y₂O₃+La₂O₃.

7. The composition of claim 1, comprising the following components with corresponding percentage amounts by weight:
| | |
|---|---|
| SiO₂ | 53-68% |
| Al₂O₃ | 13-24.5% |
| Y₂O₃+La₂O₃ | 0.5-7% |
| Y₂O₃ | 0.1-6.3% |
| La₂O₃ | 0.05-1.7% |
| CaO+MgO+SrO | 10-23% |
| CaO | <12% |
| Li₂O+Na₂O+K₂O | <2% |
| Fe₂O₃ | <1.5% |
wherein
a weight percentage ratio C1=Y₂O₃/(Y₂O₃+La₂O₃) is 0.7-0.95; and
a weight percentage ratio C2=(Li₂O+Na₂O+K₂O )/(Y₂O₃+La₂O₃) is greater than 0.2.

8. The composition of claim 1, comprising the following components with corresponding percentage amounts by weight:
| | |
|---|---|
| SiO₂ | 53-68% |
| Al₂O₃ | 13-24.5% |
| Y₂O₃+La₂O₃ | 0.5-7% |
| Y₂O₃ | 0.1-6.3% |
| La₂O₃ | 0.05-1.7% |
| CaO+MgO+SrO | 10-23% |
| CaO | 2-11% |
| Li₂O | 0.1-1.5% |
| Li₂O+Na₂O+K₂O | <2% |
| Fe₂O₃ | <1.5% |
wherein
a weight percentage ratio C1=Y₂O₃/(Y₂O₃+La₂O₃) is 0.7-0.95; and
a weight percentage ratio C2=(Li₂O+Na₂O+K₂O )/(Y₂O₃+La₂O₃) is greater than 0.2.

9. The composition of claim 1, comprising the following components with corresponding percentage amounts by weight:
| | |
|---|---|
| SiO₂ | 54-64% |
| Al₂O₃ | 14-24% |
| Y₂O₃+La₂O₃ | 1.5-6% |
| Y₂O₃ | 1-5.5% |
| La₂O₃ | 0.1-1.5% |
| CaO+MgO+SrO | 10-23% |
| CaO | 2-11% |
| Li₂O | 0.1-1.5% |
| Li₂O+Na₂O+K₂O | <2% |
| Fe₂O₃ | <1.5% |
wherein
a weight percentage ratio C1=Y₂O₃/(Y₂O₃+La₂O₃) is 0.7-0.95; and
a weight percentage ratio C2=(Li₂O+Na₂O+K₂O )/(Y₂O₃+La₂O₃) is greater than 0.22.

10. The composition of claim 1, comprising between 0.1 and 1.5 wt. % of SrO.

11. The composition of claim 1, comprising between 8.1 and 12 wt. % of MgO.

12. The composition of claim 1, comprising greater than 12 and less than or equal to 14 wt. % of MgO.

13. The composition of claim 1, comprising the following components with corresponding percentage amounts by weight:
| | |
|---|---|
| SiO₂ | 53-68% |
| Al₂O₃ | greater than 19% and less than or equal to 23% |
| Y₂O₃+La₂O₃ | 0.1-8% |
| La₂O₃ | 0.05-1.7% |
| CaO+MgO+SrO | 10-23% |
| MgO | <_11 % |
| Li₂O+Na₂O+K₂O | ≤1 % |
| Fe₂O₃ | <1.5% |
wherein
a weight percentage ratio C1=Y₂O₃/(Y₂O₃+La₂O₃) is 0.7-0.95.

14. A glass fiber, being produced using the composition of claim 1.

15. A composite material, comprising the glass fiber of claim 14.

## Patentansprüche

1. Zusammensetzung zur Herstellung einer Hochmodul-Glasfaser, umfassend die folgenden Bestandteile mit entsprechenden prozentualen Gewichtsanteilen:
| | |
|---|---|
| SiO₂ | 53-68% |
| Al₂O₃ | 13-24,5% |
| Y₂O₃+La₂O₃ | 0,1-8% |
| La₂O₃ | 0,05-1,7% |
| CaO+MgO+SrO | 10-23% |
| Li₂O+Na₂O+K₂O | <2% |
| Fe₂O₃ | <1,5% |
wobei
ein Verhältnis von prozentualen Gewichtsanteilen C1=Y₂O₃/(Y₂O₃+La₂O₃) 0,7-0,95 beträgt, und ein Verhältnis von prozentualen Gewichtsanteilen C2=(Li₂O+Na₂O+K₂O)/(Y₂O₃+La₂O₃) mehr als 0,2 beträgt.

2. Zusammensetzung nach Anspruch 1, umfassend zwischen 0,1 und 1,5 Gewichts-% Li₂O.

3. Zusammensetzung nach Anspruch 1, umfassend die folgenden Bestandteile mit entsprechenden prozentualen Gewichtsanteilen:
| | |
|---|---|
| SiO₂ | 53-68% |
| Al₂O₃ | 13-24,5% |
| Y₂O₃+La₂O₃ | 0,1-8% |
| Y₂O₃ | 0,1-6,3% |
| La₂O₃ | 0,05-1,7% |
| CaO+MgO+SrO | 10-23% |
| Li₂O+Na₂O+K₂O | <2% |
| Fe₂O₃ | <1,5% |
wobei
ein Verhältnis von prozentualen Gewichtsanteilen C1=Y₂O₃/(Y₂O₃+La₂O₃) 0,7-0,95 beträgt; und
ein Verhältnis von prozentualen Gewichtsanteilen C2=(Li₂O+Na₂O+K₂O)/(Y₂O₃+La₂O₃) mehr als 0,2 beträgt.

4. Zusammensetzung nach Anspruch 1, umfassend weniger als 12 Gewichts-% CaO.

5. Zusammensetzung nach Anspruch 1, umfassend zwischen 2 und 11 Gewichts-% CaO.

6. Zusammensetzung nach Anspruch 1, umfassend zwischen 1,5 und 6 Gewichts-% Y₂O₃+La₂O₃.

7. Zusammensetzung nach Anspruch 1, umfassend die folgenden Bestandteile mit entsprechenden prozentualen Gewichtsanteilen:
| | |
|---|---|
| SiO₂ | 53-68% |
| Al₂O₃ | 13-24,5% |
| Y₂O₃+La₂O₃ | 0,5-7% |
| Y₂O₃ | 0,1-6.3% |
| La₂O₃ | 0,05-1,7% |
| CaO+MgO+SrO | 10-23% |
| CaO | <12% |
| Li₂O+Na₂O+K₂O | <2% |
| Fe₂O₃ | <1,5% |
wobei
ein Verhältnis von prozentualen Gewichtsanteilen C1=Y₂O₃/(Y₂O₃+La₂O₃) 0,7-0,95 beträgt; und
ein Verhältnis von prozentualen Gewichtsanteilen C2=(Li₂O+Na₂O+K₂O)/(Y₂O₃+La₂O₃) mehr als 0,2 beträgt.

8. Zusammensetzung nach Anspruch 1, umfassend die folgenden Bestandteile mit entsprechenden prozentualen Gewichtsanteilen:
| | |
|---|---|
| SiO₂ | 53-68% |
| Al₂O₃ | 13-24,5% |
| Y₂O₃+La₂O₃ | 0,5-7% |
| Y₂O₃ | 0,1-6,3% |
| La₂O₃ | 0,05-1,7% |
| CaO+MgO+SrO | 10-23% |
| CaO | 2-11% |
| Li₂O | 0,1-1,5% |
| Li₂O+Na₂O+K₂O | <2% |
| Fe₂O₃ | <1,5% |
wobei
ein Verhältnis von prozentualen Gewichtsanteilen C1=Y₂O₃/(Y₂O₃+La₂O₃) 0,7-0,95 beträgt; und
ein Verhältnis von prozentualen Gewichtsanteilen C2=(Li₂O+Na₂O+K₂O)/(Y₂O₃+La₂O₃) mehr als 0,2 beträgt.

9. Zusammensetzung nach Anspruch 1, umfassend die folgenden Bestandteile mit entsprechenden prozentualen Gewichtsanteilen:
| | |
|---|---|
| SiO₂ | 54-64% |
| Al₂O₃ | 14-24% |
| Y₂O₃+La₂O₃ | 1,5-6% |
| Y₂O₃ | 1-5,5% |
| La₂O₃ | 0,1-1,5% |
| CaO+MgO+SrO | 10-23% |
| CaO | 2-11% |
| Li₂O | 0,1-1,5% |
| Li₂O+Na₂O+K₂O | <2% |
| Fe₂O₃ | <1,5% |
wobei
ein Verhältnis von prozentualen Gewichtsanteilen C1=Y₂O₃/(Y₂O₃+La₂O₃) 0,7-0,95 beträgt; und
ein Verhältnis von prozentualen Gewichtsanteilen C2=(Li₂O+Na₂O+K₂O)/(Y₂O₃+La₂O₃) mehr als 0,22 beträgt.

10. Zusammensetzung nach Anspruch 1, umfassend zwischen 0,1 und 1,5 Gewichts-% SrO.

11. Zusammensetzung nach Anspruch 1, umfassend zwischen 8,1 und 12 Gewichts-% MgO.

12. Zusammensetzung nach Anspruch 1, umfassend mehr als 12 und weniger als oder gleich 14 Gewichts-% MgO.

13. Zusammensetzung nach Anspruch 1, umfassend die folgenden Bestandteile mit entsprechenden prozentualen Gewichtsanteilen:
| | |
|---|---|
| SiO₂ | 53-68% |
| Al₂O₃ | mehr als 19% und weniger als oder gleich 23% |
| Y₂O₃+La₂O₃ | 0,1-8% |
| La₂O₃ | 0,05-1,7% |
| CaO+MgO+SrO | 10-23% |
| MgO | ≤11% |
| Li₂O+Na₂O+K₂O | ≤1% |
| Fe₂O₃ | <1,5% |
wobei
ein Verhältnis von prozentualen Gewichtsanteilen C1 =Y₂O₃/(Y₂O₃+La₂O₃) 0,7-0,95 beträgt.

14. Glasfaser, die unter Verwendung der Zusammensetzung nach Anspruch 1 hergestellt ist.

15. Verbundwerkstoff, umfassend die Glasfaser nach Anspruch 14.

## Revendications

1. Composition pour la production d'une fibre de verre à haut module, comprenant les composants suivants avec les pourcentages correspondants en poids :
| | |
|---|---|
| SiO₂ | 53 à 68 % |
| Al₂O₃ | 13 à 24,5 % |
| Y₂O₃+La₂O₃ | 0,1 à 8 % |
| La₂O₃ | 0,05 à 1,7 % |
| CaO+MgO+SrO | 10 à 23 % |
| Li₂O+Na₂O+K₂O | < 2 % |
| Fe₂O₃ | < 1,5 % |
dans laquelle
un rapport de pourcentage en poids C1 =Y₂O₃/(Y₂O₃+La₂O₃) est de 0,7 à 0,95, et un rapport de pourcentage en poids C2=(Li₂O+Na₂O+K₂O)/(Y₂O₃+La₂O₃) est supérieur à 0,2.

2. Composition selon la revendication 1, comprenant entre 0,1 et 1,5 % en poids de Li₂O.

3. Composition selon la revendication 1, comprenant les composants suivants avec les pourcentages correspondants en poids :
| | |
|---|---|
| SiO₂ | 53 à 68 % |
| Al₂O₃ | 13 à 24,5 % |
| Y₂O₃+La₂O₃ | 0,1 à 8 % |
| Y₂O₃ | 0,1 à 6,3 % |
| La₂O₃ | 0,05 à 1,7 % |
| CaO+MgO+SrO | 10 à 23 % |
| Li₂O+Na₂O+K₂O | < 2 % |
| Fe₂O₃ | < 1,5 % |
dans laquelle
un rapport de pourcentage en poids C1 =Y₂O₃/(Y₂O₃+La₂O₃) est de 0,7 à 0,95 ; et
un rapport de pourcentage en poids C2=(Li₂O+Na₂O+K₂O)/(Y₂O₃+La₂O₃) est supérieur à 0,2.

4. Composition selon la revendication 1, comprenant moins de 12 % en poids de CaO.

5. Composition selon la revendication 1, comprenant entre 2 et 11 % en poids de CaO.

6. Composition selon la revendication 1, comprenant entre 1,5 et 6 % en poids de Y₂O₃+La₂O₃.

7. Composition selon la revendication 1, comprenant les composants suivants avec les pourcentages correspondants en poids :
| | |
|---|---|
| SiO₂ | 53 à 68 % |
| Al₂O₃ | 13 à 24,5 % |
| Y₂O₃+La₂O₃ | 0,5 à 7 % |
| Y₂O₃ | 0,1 à 6,3 % |
| La₂O₃ | 0,05 à 1,7 % |
| CaO+MgO+SrO | 10 à 23 % |
| CaO | < 12 % |
| Li₂O+Na₂O+K₂O | < 2 % |
| Fe₂O₃ | < 1,5 % |
dans laquelle
un rapport de pourcentage en poids C1 =Y₂O₃/(Y₂O₃+La₂O₃) est de 0,7 à 0,95 ; et
un rapport de pourcentage en poids C2=(Li₂O+Na₂O+K₂O)/(Y₂O₃+La₂O₃) est supérieur à 0,2.

8. Composition selon la revendication 1, comprenant les composants suivants avec les pourcentages correspondants en poids :
| | |
|---|---|
| SiO₂ | 53 à 68 % |
| Al₂O₃ | 13 à 24,5 % |
| Y₂O₃+La₂O₃ | 0,5 à 7 % |
| Y₂O₃ | 0,1 à 6,3 % |
| La₂O₃ | 0,05 à 1,7 % |
| CaO+MgO+SrO | 10 à 23 % |
| CaO | 2 à 11 % |
| Li₂O | 0,1 à 1,5 % |
| Li₂O+Na₂O+K₂O | < 2 % |
| Fe₂O₃ | < 1,5 % |
dans laquelle
un rapport de pourcentage en poids C1 =Y₂O₃/(Y₂O₃+La₂O₃) est de 0,7 à 0,95 ; et
un rapport de pourcentage en poids C2=(Li₂O+Na₂O+K₂O)/(Y₂O₃+La₂O₃) est supérieur à 0,2.

9. Composition selon la revendication 1, comprenant les composants suivants avec les pourcentages correspondants en poids :
| | |
|---|---|
| SiO₂ | 54 à 64 % |
| Al₂O₃ | 14 à 24 % |
| Y₂O₃+La₂O₃ | 1,5 à 6 % |
| Y₂O₃ | 1 à 5,5 % |
| La₂O₃ | 0,1 à 1,5 % |
| CaO+MgO+SrO | 10 à 23 % |
| CaO | 2 à 11 % |
| Li₂O | 0,1 à 1,5 % |
| Li₂O+Na₂O+K₂O | < 2 % |
| Fe₂O₃ | < 1,5 % |
dans laquelle
un rapport de pourcentage en poids C1 =Y₂O₃/(Y₂O₃+La₂O₃) est de 0,7 à 0,95 ; et
un rapport de pourcentage en poids C2=(Li₂O+Na₂O+K₂O)/(Y₂O₃+La₂O₃) est supérieur à 0,22.

10. Composition selon la revendication 1, comprenant entre 0,1 et 1,5 % en poids de SrO.

11. Composition selon la revendication 1, comprenant entre 8,1 et 12 % en poids de MgO.

12. Composition selon la revendication 1, comprenant plus de 12 et moins ou égal à 14 % en poids de MgO.

13. Composition selon la revendication 1, comprenant les composants suivants avec les pourcentages correspondants en poids :
| | |
|---|---|
| SiO₂ | 53 à 68 % |
| Al₂O₃ | plus de 19 % et moins ou égal à 23 % |
| Y₂O₃+La₂O₃ | 0,1 à 8 % |
| La₂O₃ | 0,05 à 1,7 % |
| CaO+MgO+SrO | 10 à 23 % |
| MgO | ≤ 11 % |
| Li₂O+Na₂O+K₂O | ≤ 1 % |
| Fe₂O₃ | <1,5 % |
dans laquelle
un rapport de pourcentage en poids C1 =Y₂O₃/(Y₂O₃+La₂O₃) est de 0,7 à 0,95.

14. Fibre de verre produite à l'aide de la composition selon la revendication 1.

15. Matériau composite, comprenant la fibre de verre selon la revendication 14.
